(19) Europäisches Patentamt
European Patent Office
Office européen des brevets

(11) **EP 4 757 210 A1**

(12) **EUROPEAN PATENT APPLICATION**
published in accordance with Art. 153(4) EPC

(43) Date of publication:
**10.06.2026 Bulletin 2026/24**

(21) Application number: **23946977.8**

(22) Date of filing: **28.07.2023**

(51) International Patent Classification (IPC):
***H04B 17/382*** (2015.01)

(52) Cooperative Patent Classification (CPC):
**H04B 17/382; H04L 5/00; H04L 27/26; H04W 72/0453**

(86) International application number:
**PCT/CN2023/110038**

(87) International publication number:
**WO 2025/025021 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **ZHAO, Qun**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **COMMUNICATION METHOD, WIRELESS TRANSMITTER, WIRELESS RECEIVER, AND COMMUNICATION APPARATUS AND SYSTEM**

(57) The present disclosure relates to a communication method, a wireless transmitter, a wireless receiver, and a communication apparatus and system. The communication method comprises: a wireless transmitter sending a first parameter to a wireless receiver, wherein the first parameter is used for determining a first radio resource unavailable for wireless communication, and OFDM subcarriers occupied by the first radio resource in a frequency domain are non-uniformly distributed; and sending a wireless communication signal on a second radio resource other than the first radio resource. The present disclosure can reduce a waste of radio resources, and improve frequency spectrum efficiency.

FIG. 3

**Description**

**TECHNICAL FIELD**

The disclosure relates to the field of communication technology, specifically to a communication method, a wireless transmitter, a wireless receiver, a communication apparatus, and a system.

**BACKGROUND**

In the scenario of integrated sensing and communication (ISAC), a reference signal for sensing (hereinafter referred to as a sensing reference signal) may be multiplexed with data for wireless communication, for instance, the sensing reference signal and wireless communication data may share a two-dimensional time-frequency resource grid.

**SUMMARY**

Embodiments of the disclosure provide a communication method, a wireless transmitter, a wireless receiver, a communication apparatus, and a system.
According to a first aspect of the embodiments of the disclosure, a communication method is provided, performed by a wireless transmitter. The communication method includes:

sending a first parameter to a wireless receiver, in which the first parameter is configured to determine a first radio resource unavailable for wireless communication, and orthogonal frequency division multiplexing (OFDM) subcarriers occupied by the first radio resource in a frequency domain are non-uniformly distributed; and
sending a wireless communication signal on a second radio resource other than the first radio resource.

According to a second aspect of the embodiments of the disclosure, a communication method is provided, and performed by a wireless receiver. The communication method includes:

receiving a first parameter sent by a wireless transmitter;
determining a first radio resource according to the first parameter, in which OFDM subcarriers occupied by the first radio resource in a frequency domain are non-uniformly distributed; and
receiving a wireless communication signal from a second radio resource other than the first radio resource.

According to a third aspect of the embodiments of the disclosure, a wireless transmitter is provided, including a transceiver module configured to:

send a first parameter to a wireless receiver, in which the first parameter is configured to determine a first radio resource unavailable for wireless communication, and OFDM subcarriers occupied by the first radio resource in a frequency domain are non-uniformly distributed; and
send a wireless communication signal on a second radio resource other than the first radio resource.

According to a fourth aspect of the embodiments of the disclosure, a wireless receiver is provided, including :

a transceiver module configured to receive a first parameter sent by a wireless transmitter; and
a processing module configured to determine a first radio resource according to the first parameter, in which OFDM subcarriers occupied by the first radio resource in a frequency domain are non-uniformly distributed,
in which the transceiver module is further configured to receive a wireless communication signal from a second radio resource other than the first radio resource.

According to a fifth aspect of the embodiments of the disclosure, a communication apparatus is provided, including:

one or more processors,
in which the communication apparatus is configured to execute the communication method in the first aspect of the embodiments of the disclosure.

According to a sixth aspect of the embodiments of the disclosure, a communication apparatus is provided, including:

one or more processors;

in which the communication apparatus is configured to execute the communication method in the second aspect of the embodiments of the disclosure.

According to a seventh aspect of the embodiments of the disclosure, a communication system is provided, including at least one of a wireless transmitter and a wireless receiver. The wireless transmitter is configured to implement the communication method in the first aspect of the embodiments of the disclosure, and the wireless receiver is configured to implement the communication method in the second aspect of the embodiments of the disclosure.

According to an eighth aspect of the embodiments of the disclosure, a storage medium is provided. The storage medium stores instructions that, when run on a communication device, cause the communication device to execute the communication method in the first aspect of the embodiments of the disclosure or the communication method in the second aspect of the embodiments of the disclosure.

The embodiments of the disclosure may reduce a waste of radio resources and improve a spectrum efficiency.

## BRIEF DESCRIPTION OF THE DRAWINGS

To illustrate the technical solutions in the embodiments of the disclosure more clearly, the accompanying drawings required for describing the embodiments are introduced below. The following drawings are merely some embodiments of the disclosure and shall not impose any specific limitation on the protection scope of the disclosure.

FIG. 1a is a schematic diagram of a sensing reference signal pattern according to an embodiment of the disclosure.

FIG. 1b is a schematic diagram of a rate matching pattern according to an embodiment of the disclosure.

FIG. 1c is a schematic diagram of a first radio resource according to an embodiment of the disclosure.

FIG. 2 is a schematic diagram of a communication system according to an embodiment of the disclosure.

FIG. 3 is an interaction diagram of a communication method according to an embodiment of the disclosure.

FIG. 4 is a flow chart of a communication method according to an embodiment of the disclosure.

FIG. 5 is a flow chart of a communication method according to an embodiment of the disclosure.

FIG. 6a is a schematic diagram of a wireless transmitter according to an embodiment of the disclosure.

FIG. 6b is a schematic diagram of a wireless receiver according to an embodiment of the disclosure.

FIG. 7 is a schematic diagram of a communication device according to an embodiment of the disclosure.

## DETAILED DESCRIPTION

Embodiments of the disclosure provide a communication method, a wireless transmitter, a wireless receiver, a communication apparatus, and a system.

According to a first aspect of the embodiments of the disclosure, a communication method is provided, performed by a wireless transmitter. The communication method includes:

sending a first parameter to a wireless receiver, in which the first parameter is configured to determine a first radio resource unavailable for wireless communication, and orthogonal frequency division multiplexing (OFDM) subcarriers occupied by the first radio resource in a frequency domain are non-uniformly distributed; and

sending a wireless communication signal on a second radio resource other than the first radio resource.

In the above embodiments, the wireless transmitter sends the wireless communication signal on the second radio resource other than the first radio resource, and transmits the first parameter to the wireless receiver, so as to facilitate the wireless receiver to determine the first radio resource non-uniformly distributed in the frequency domain based on the first parameter, and receive the wireless communication signal on the second radio resource other than the first radio resource. The first radio resource in the embodiments of the disclosure is non-uniformly distributed in the frequency domain, which may be applicable to a nested-pattern sensing reference signal, reduce a waste of radio resources, and improve a spectrum efficiency.

In combination with some embodiments of the first aspect, in some embodiments, the OFDM subcarriers occupied by the first radio resource in the frequency domain are determined based on a plurality of OFDM subcarrier position sets, OFDM subcarrier positions contained in one OFDM subcarrier position set are uniformly distributed based on a corresponding frequency domain interval, and frequency domain intervals respectively corresponding to the plurality of OFDM subcarrier position sets are different.

In the above embodiments, the OFDM subcarriers occupied by the first radio resource in the frequency domain are determined based on the plurality of OFDM subcarrier position sets with unequal frequency domain intervals and uniform frequency domain distribution.

In combination with some embodiments of the first aspect, in some embodiments, the first parameter includes at least one of:

> a number N of OFDM subcarriers occupied in the frequency domain;
> a minimum subcarrier spacing ($K_{min}$);
> an offset parameter of a subcarrier (Offset);
> a slot period ($T_{slot}$);
> a starting slot number ($s_0$);
> a number of slots ($s_{num}$); or
>
> a set $\mathcal{L}$ of sequence numbers corresponding to OFDM symbols within a slot.

In the above embodiments, sequence numbers of the occupied OFDM subcarriers in the frequency domain, sequence numbers of occupied time slots in the time domain, and the sequence numbers of the OFDM symbols may be determined according to the aforementioned first parameter, thereby determining the first radio resource.

In combination with some embodiments of the first aspect, in some embodiments, the Offset includes at least one of:

> an offset of a non-negative integer smaller than the $K_{min}$; or
> an offset of a starting physical resource block (PRB) of the first radio resource relative to a common resource block (CRB) 0.

In the above embodiments, the Offset may be combined with the offset related to the subcarrier and the offset related to the PRB.

In combination with some embodiments of the first aspect, in some embodiments, a set S of positions of the OFDM subcarriers occupied by the first radio resource in the frequency domain satisfies one of:

$$S = \left\{ nK_{min} + \mathit{Offset} \mid n = 0, \cdots, \left\lfloor \frac{N}{2} \right\rfloor \right\} \cup \left\{ \left( n \left\lfloor \frac{N}{2} \right\rfloor + n - 1 \right) K_{min} + \mathit{Offset} \mid n = 1, \cdots, \left\lceil \frac{N}{2} \right\rceil \right\};$$

$$S = \left\{ nK_{min} + \mathit{Offset} \mid n = 0, \cdots, \left\lfloor \frac{N}{2} \right\rfloor - 1 \right\} \cup \left\{ \left( n \left\lfloor \frac{N}{2} \right\rfloor + n - 1 \right) K_{min} + \mathit{Offset} \mid n = 1, \cdots, \left\lceil \frac{N}{2} \right\rceil \right\};$$

and

$$S = \left\{ nK_{min} + \mathit{Offset} \mid n = 0, \cdots, \left\lfloor \frac{N}{2} \right\rfloor \right\} \cup \left\{ \left[ (n+1) \left\lfloor \frac{N}{2} \right\rfloor + n \right] K_{min} + \mathit{Offset} \mid n = 1, \cdots, \left\lceil \frac{N}{2} \right\rceil - 1 \right\}.$$

In the above embodiments, the set of positions of the OFDM subcarriers occupied by the first radio resource in the frequency domain satisfies one of the aforementioned formulas. The determined first radio resource is identical to a nested pattern of the sensing reference signal, which may avoid the waste of radio resources and prevent an interference between a wireless communication system and a wireless sensing system.

In combination with some embodiments of the first aspect, in some embodiments, sending the first parameter to the wireless receiver includes:

> sending the first parameter to the wireless receiver via downlink control information (DCI), in which the first parameter includes a parameter group number; or

sending the first parameter to the wireless receiver via a radio resource control (RRC) signaling.

In the above embodiments, the parameter group number may be sent via the DCI, thus only requiring to transmit a signaling with several bits; alternatively, the first parameter may be sent via the RRC signaling.

According to a second aspect of the embodiments of the disclosure, a communication method is provided, performed by a wireless receiver. The communication method includes:

receiving a first parameter sent by a wireless transmitter;

determining a first radio resource according to the first parameter, in which OFDM subcarriers occupied by the first radio resource in a frequency domain are non-uniformly distributed; and

receiving a wireless communication signal from a second radio resource other than the first radio resource.

In combination with some embodiments of the second aspect, in some embodiments, the OFDM subcarriers occupied by the first radio resource in the frequency domain are determined based on a plurality of OFDM subcarrier position sets, OFDM subcarrier positions contained in one OFDM subcarrier position set are uniformly distributed based on a corresponding frequency domain interval, and frequency domain intervals respectively corresponding to the plurality of OFDM subcarrier position sets are different.

In combination with some embodiments of the second aspect, in some embodiments, the first parameter includes at least one of:

a number N of OFDM subcarriers occupied in the frequency domain;

a minimum subcarrier spacing ($K_{min}$);

an offset parameter of a subcarrier (Offset);

a slot period ($T_{slot}$);

a starting slot number ($s_0$);

a number of slots ($s_{num}$); or

a set $\mathcal{L}$ of sequence numbers corresponding to OFDM symbols within a slot.

In combination with some embodiments of the second aspect, in some embodiments, the Offset includes at least one of:

an offset of a non-negative integer smaller than the $K_{min}$; or

an offset of a starting PRB of the first radio resource relative to a CRB 0.

In combination with some embodiments of the second aspect, in some embodiments, a set S of positions of the OFDM subcarriers occupied by the first radio resource in the frequency domain satisfies one of:

$$S = \left\{ nK_{min} + Offset \mid n = 0, \cdots, \left\lfloor \frac{N}{2} \right\rfloor \right\} \cup \left\{ \left( n \left\lfloor \frac{N}{2} \right\rfloor + n - 1 \right) K_{min} + Offset \mid n = 1, \cdots, \left\lceil \frac{N}{2} \right\rceil \right\};$$

$$S = \left\{ nK_{min} + Offset \mid n = 0, \cdots, \left\lfloor \frac{N}{2} \right\rfloor - 1 \right\} \cup \left\{ \left( n \left\lfloor \frac{N}{2} \right\rfloor + n - 1 \right) K_{min} + Offset \mid n = 1, \cdots, \left\lceil \frac{N}{2} \right\rceil \right\};$$

and

$$S = \left\{ nK_{min} + Offset \mid n = 0, \cdots, \left\lfloor \frac{N}{2} \right\rfloor \right\} \cup \left\{ \left[ (n+1) \left\lfloor \frac{N}{2} \right\rfloor + n \right] K_{min} + Offset \mid n = 1, \cdots, \left\lceil \frac{N}{2} \right\rceil - 1 \right\}.$$

In combination with some embodiments of the first aspect, in some embodiments, receiving the first parameter sent by the wireless transmitter includes:

receiving the first parameter sent by the wireless transmitter via DCI, in which the first parameter includes a parameter group number; or

receiving the first parameter sent by the wireless transmitter via an RRC signaling.

According to a third aspect of the embodiments of the disclosure, a wireless transmitter is provided, including a transceiver module configured to:

send a first parameter to a wireless receiver, in which the first parameter is configured to determine a first radio resource unavailable for wireless communication, and OFDM subcarriers occupied by the first radio resource in a frequency domain are non-uniformly distributed; and
send a wireless communication signal on a second radio resource other than the first radio resource.

According to a fourth aspect of the embodiments of the disclosure, a wireless receiver is provided, including :

a transceiver module configured to receive a first parameter sent by a wireless transmitter; and
a processing module configured to determine a first radio resource according to the first parameter, in which OFDM subcarriers occupied by the first radio resource in a frequency domain are non-uniformly distributed,
in which the transceiver module is further configured to receive a wireless communication signal from a second radio resource other than the first radio resource.

According to a fifth aspect of the embodiments of the disclosure, a communication apparatus is provided, including:

one or more processors,
in which the communication apparatus is configured to execute the communication method in the first aspect or the optional implementations of the first aspect.

According to a sixth aspect of the embodiments of the disclosure, a communication apparatus is provided, including:

one or more processors;
in which the communication apparatus is configured to execute the communication method in the second aspect or the optional implementations of the second aspect.

According to a seventh aspect of the embodiments of the disclosure, a communication system is provided, including at least one of a wireless transmitter and a wireless receiver. The wireless transmitter is configured to implement the communication method in the first aspect or the optional implementations of the first aspect, and the wireless receiver is configured to implement the communication method in the second aspect or the optional implementations of the second aspect.

According to an eighth aspect of the embodiments of the disclosure, a storage medium is provided. The storage medium stores instructions that, when run on a communication device, cause the communication device to execute the communication method in the first aspect or the optional implementations of the first aspect, or to execute the communication method in the second aspect or the optional implementations of the second aspect.

It may be understood that the aforementioned wireless transmitter, wireless receiver, communication system, and storage media are all configured to implement the methods proposed in the embodiments of the disclosure. Therefore, reference may be made to the beneficial effects set forth in the corresponding methods for the beneficial effects achievable thereby, which are not repeated herein.

The embodiments of the disclosure provide a communication method, a wireless transmitter, a wireless receiver, a communication apparatus, and a communication system. In some embodiments, the terms including wireless transmitter, first device, first communication device, transmitter, communication transmitter, and first communication apparatus may be used interchangeably; and the terms including wireless receiver, second device, second communication device, receiver, communication receiver, and second communication apparatus may also be used interchangeably.

The embodiments of the disclosure are not exhaustive but merely illustrative of some embodiments, and shall not serve as specific limitations on the protection scope of the disclosure. Without conflict, each step in a certain embodiment may be implemented as an independent embodiment, and the steps may be combined arbitrarily. For example, the solution after removing some steps in a certain embodiment may also be implemented as an independent embodiment, and the order of the steps in a certain embodiment may be swapped arbitrarily. In addition, optional implementations in a certain embodiment may be combined arbitrarily; furthermore, the embodiments may be combined arbitrarily. For example, some or all steps of different embodiments may be combined arbitrarily, and a certain embodiment may be combined arbitrarily with optional implementations of other embodiments.

In each embodiment of the disclosure, unless otherwise specified and without logical conflict, the terms and/or descriptions between the embodiments are consistent and may be cross-referenced. Technical features in different embodiments may be combined to form new embodiments according to their inherent logical relationships.

The terms used in the embodiments of the disclosure are merely for the purpose of describing specific embodiments and are not intended to limit the disclosure.

In the embodiments of the disclosure, unless otherwise stated, elements expressed in the singular form, such as "a", "an", "the", "said", "aforesaid", and "this", may mean "one and only one", or "one or more", "at least one", etc. For example, when articles such as "a", "an", and "the" in English are used in translation, the noun following the article may be understood as a singular form or a plural form.

In the embodiments of the disclosure, "a plurality of" refers to two or more.

In some embodiments, terms such as "at least one (of)", "one or more", "a plurality of", and "multiple" may be used interchangeably.

In some embodiments, recording methods such as "at least one of A and B", "A and/or B", "A in one case and B in another case", and "one case A and another case B" may include the following technical solutions depending on the context: executing A in some embodiments (executing A independently of B); executing B in some embodiments (executing B independently of A); selectively executing either A or B in some embodiments (A and B are selectively executed); and executing both A and B in some embodiments (both A and B are executed). The same applies when there are more branches such as A, B, and C.

In some embodiments, recording methods such as "A or B" may include the following technical solutions depending on the context: executing A in some embodiments (executing A independently of B); executing B in some embodiments (executing B independently of A); and selectively executing either A or B in some embodiments (A and B are selectively executed). The same applies when there are more branches such as A, B, and C.

Prefixes such as "first" and "second" in the embodiments of the disclosure are merely used to distinguish different description objects and do not limit the position, order, priority, quantity, or content of the description objects. For the description of the description objects, refer to the description in the claims or the context of the embodiments, and unnecessary limitations shall not be constituted due to the use of the prefixes. For example, when the description object is a "field", the ordinal numbers before "field" in "the first field" and "the second field" do not limit the position or order between the "fields", and "first" and "second" do not limit whether the "fields" modified thereby are in the same message or the order between "the first field" and "the second field". For another example, when the description object is a "level", the ordinal numbers before "level" in "the first level" and "the second level" do not limit the priority between the "levels". For yet another example, the quantity of the description object is not limited by the ordinal number and may be one or more. Taking "the first apparatus" as an example, the quantity of the "apparatus" may be one or more. In addition, objects modified by different prefixes may be the same or different. For example, when the description object is an "apparatus", "the first apparatus" and "the second apparatus" may be the same or different apparatuses, and their types may be the same or different; for another example, when the description object is "information", "the first information" and "the second information" may be the same or different information, and their contents may be the same or different.

In some embodiments, expressions such as "including A", "containing A", "used to indicate A", and "carrying A" may be interpreted as directly carrying A or indirectly indicating A.

In some embodiments, the terms "in response to...", "in response to determining that...", "in the case that...", "when...", "at the time when...", "if...", and "in the event that..." may be used interchangeably.

In some embodiments, terms such as "greater than", "greater than or equal to", "not less than", "more than", "more than or equal to", "no less than", "higher than", "higher than or equal to", "not lower than", and "above" may be used interchangeably; terms such as "less than", "less than or equal to", "not greater than", "fewer than", "fewer than or equal to", "no more than", "lower than", "lower than or equal to", "not higher than", and "below" may be used interchangeably.

In some embodiments, "apparatus" and "device" may be construed as either entity or virtual. Names of the "apparatus" and "device" are not limited to those recorded in the embodiments, and in some cases, may also be understood as "equipment", "device", "circuit", "network element", "node", "function", "unit", "section", "system", "network", "chip", "chip system", "entity", and "subject", and the like.

In some embodiments, the term "network" may be interpreted as an apparatus included in a network (e.g., an access network device, a core network device, etc.).

In some embodiments, "access network device (AN device)" may also be called "radio access network device (RAN device)", "base station (BS)", "radio base station", "fixed station", and, in some embodiments, may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" and the like.

In some embodiments, "terminal" or "terminal device" may be called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "wireless terminal", "remote terminal", "handset", "user agent", "mobile client", and "client" and the like.

In some embodiments, acquiring data, information, etc., may comply with the laws and regulations of the country where it is located.

In some embodiments, data, information, etc., may be acquired with the user's consent.

In addition, each element, each row, or each column in the tables of the embodiments of the disclosure may be implemented as an independent embodiment, and any combination of any elements, any rows, or any columns may also be implemented as an independent embodiment.

Wireless communication and wireless sensing are highly similar. Integrated sensing and communication (ISAC) may integrate the wireless communication and the wireless sensing, and introduce close cooperation between the wireless communication and the wireless sensing, so that both the wireless communication and the wireless sensing may benefit. It may not only improve an effectiveness and reliability of the wireless communication, but also enhance an accuracy of the wireless sensing. Furthermore, devices that support both the wireless communication and the wireless sensing may reduce network deployment costs.

In the wireless sensing, it is usually necessary to estimate a distance, an azimuth angle (e.g., horizontal angle and vertical angle), and a speed of a sensing target. Generalized sensing also includes wireless tracking and radio frequency identification of the sensing target. To achieve high-precision sensing, a wireless sensing transmitter usually sends a dedicated reference signal for sensing, hereinafter referred to as a sensing reference signal.

Sensing modes may include a monostatic sensing mode and a bistatic sensing mode. For the monostatic sensing mode, the wireless sensing transmitter may send the sensing reference signal, and estimate at least one of the distance, angle, and speed of the sensing target by measuring an echo of the sensing reference signal. For the bistatic sensing mode, the wireless sensing transmitter may send the sensing reference signal, and a wireless sensing receiver receives the sensing reference signal and measures the sensing reference signal, thereby estimating at least one of the distance, angle, and speed of the sensing target.

Taking an estimation of the distance of the sensing target as an example, the wireless sensing receiver needs to accurately estimate an arrival time of a first echo path reflected by the sensing target (in the monostatic sensing mode) or a first path scattered by the sensing target (in the bistatic sensing mode). To improve an estimation accuracy, a wireless sensing network needs a high time domain resolution, and the time domain resolution depends on bandwidth. In other words, the sensing reference signal needs to have a large bandwidth, which is very necessary for a high-precision distance sensing. On the other hand, if a frequency domain density of the sensing reference signal is too low, i.e., a frequency domain interval between adjacent subcarriers of the sensing reference signal is too large, it may cause frequency domain undersampling, resulting in the wireless sensing receiver observing mirrored images of a plurality of channel impulse response (CIR), which in turn leads to timing ambiguity and large sensing errors.

If the sensing reference signal adopts a uniformly distributed comb pattern, to avoid the frequency domain undersampling while satisfying a large bandwidth requirement, it may result in a huge sensing reference signal overhead and also reduce a spectrum efficiency. On the other hand, a purpose of the sensing reference signal is to estimate sensing parameters (e.g., distance, angle, speed, etc.) rather than a channel fading itself. Therefore, the sensing reference signal may adopt a non-uniformly distributed pattern, such as the nested pattern.

In a typical ISAC scenario, the sensing reference signal for the wireless sensing may be multiplexed with wireless communication data, for example, the sensing reference signal and the wireless communication data share a two-dimensional time-frequency resource grid. In comparison, a wireless sensing link is more sensitive to an interference than a wireless communication link oriented towards throughput maximization. That is, once the sensing reference signal is interfered with, the accuracy and performance of the wireless sensing may decrease significantly.

To prevent the sensing reference signal from being interfered with by communication data, a simple and effective method is to make the sensing reference signal and a wireless communication signal (including a data payload and/or a reference signal in the wireless communication, etc.) use different radio resources (i.e., non-overlapping radio resources). When mapping the wireless communication signal to the two-dimensional time-frequency resource grid, the wireless transmitter needs to skip a resource element (RE) where the sensing reference signal is located, i.e., perform a rate match. Similarly, the wireless receiver also needs to skip the aforementioned RE when receiving the wireless communication signal.

However, currently defined rate matching patterns, including a cell reference signal (CRS) and a channel state information reference signal (CSI-RS), all adopt uniformly distributed patterns, and there is no rate matching pattern applicable to nested-pattern sensing reference signals yet.

Taking the nested pattern as an example, in some embodiments, a sensing reference signal pattern is formed by nesting two uniform comb patterns with unequal frequency domain intervals. For instance, OFDM subcarriers occupied by the sensing reference signal pattern in the frequency domain are determined based on two OFDM subcarrier position sets with unequal frequency domain intervals and uniform frequency domain distribution.

In some embodiments, a set S of positions of the OFDM subcarriers occupied by the sensing reference signal pattern in the frequency domain satisfies one of:

$$S = \left\{ nK_{min} + \textit{Offset} \mid n = 0, \cdots, \left\lfloor \frac{N}{2} \right\rfloor \right\} \cup \left\{ \left( n \left\lfloor \frac{N}{2} \right\rfloor + n - 1 \right) K_{min} + \textit{Offset} \mid n = 1, \cdots, \left\lceil \frac{N}{2} \right\rceil \right\} \qquad (1)$$

$$S = \left\{ nK_{min} + \textit{Offset} \mid n = 0, \cdots, \left\lfloor \frac{N}{2} \right\rfloor - 1 \right\} \cup \left\{ \left( n \left\lfloor \frac{N}{2} \right\rfloor + n - 1 \right) K_{min} + \textit{Offset} \mid n = 1, \cdots, \left\lceil \frac{N}{2} \right\rceil \right\} \qquad (2)$$

$$S = \left\{ nK_{min} + \textit{Offset} \mid n = 0, \cdots, \left\lfloor \frac{N}{2} \right\rfloor \right\} \cup \left\{ \left[ (n+1) \left\lfloor \frac{N}{2} \right\rfloor + n \right] K_{min} + \textit{Offset} \mid n = 1, \cdots, \left\lceil \frac{N}{2} \right\rceil - 1 \right\} \qquad (3)$$

According to the aforementioned formulas, the OFDM subcarriers occupied by the sensing reference signal pattern in the frequency domain are determined by taking a union of sequence numbers of the OFDM subcarriers included in the two OFDM subcarrier position sets. Taking the aforementioned formula (3) as an example, the frequency domain interval corresponding to one of the OFDM subcarrier position sets is $K_{min}$, and the frequency domain interval corresponding to the other OFDM subcarrier position set is $\left( \left\lfloor \frac{N}{2} \right\rfloor + 1 \right) K_{min}$. That is, the frequency domain intervals corresponding to the two OFDM subcarrier position sets are different, and the larger frequency domain interval is an integer multiple of the smaller frequency domain interval.

In the above formulas, n is a variable, denoting the $n^{-th}$ OFDM subcarrier in the OFDM subcarrier position set; $K_{min}$ denotes the minimum subcarrier spacing; N denotes the number of OFDM subcarriers occupied in the frequency domain; Offset denotes the offset parameter of the subcarrier. $\left\lfloor \frac{N}{2} \right\rfloor$ represents a floor function of $\frac{N}{2}$, and $\left\lceil \frac{N}{2} \right\rceil$ represents a ceiling function of $\frac{N}{2}$.

Taking formula (3) as an example, assuming that N=7, $K_{min}$=2, and Offset=25, the set of positions of the OFDM subcarriers occupied by the sensing reference signal pattern in the frequency domain may be obtained as follows: S= {25,27,29,31} U {39,47,55}={25,27,29,31,39,47,55}.

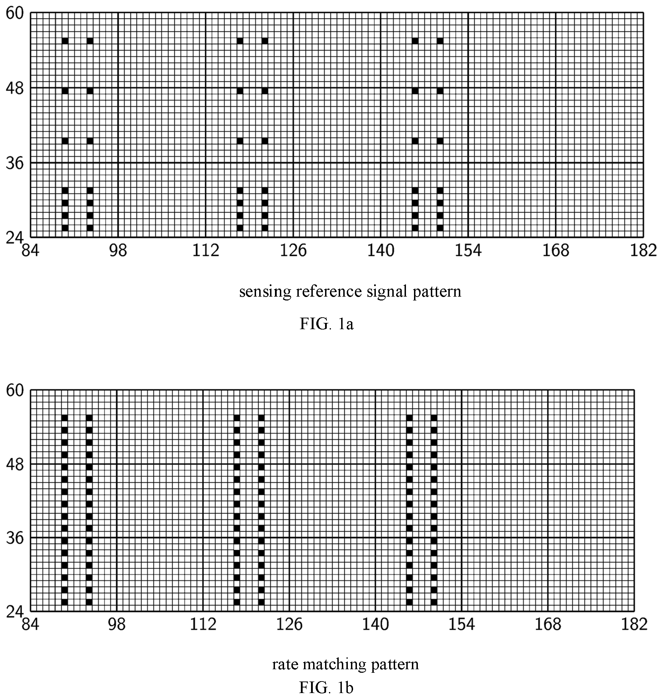

FIG. 1a is a schematic diagram of a sensing reference signal pattern according to an embodiment of the disclosure. As shown in FIG. 1a, the OFDM subcarriers occupied by the sensing reference signal pattern in the frequency domain are determined by an OFDM subcarrier position set {25,27,29,31\} with a frequency domain interval of 2 and an OFDM subcarrier position set {39,47,55} with a frequency domain interval of 8. It may be seen from FIG. 1a that the sensing reference signal pattern is non-uniformly distributed in the frequency domain.

On this basis, when the wireless transmitter performs a resource mapping on the wireless communication signal, if a uniformly distributed rate matching pattern is to be used for the rate match, the frequency domain interval of the rate matching pattern may only be a greatest common divisor of the above two frequency domain intervals. Since the frequency domain intervals of the two uniform comb patterns forming the sensing reference signal pattern are unequal, and the larger frequency domain interval is an integer multiple of the smaller frequency domain interval, the greatest common divisor is the aforementioned smaller frequency domain interval, i.e., the frequency domain interval used by the uniformly distributed rate matching pattern may only be equal to the smaller frequency domain interval.

Taking the sensing reference signal pattern shown in FIG. 1a as an example, the frequency domain interval used by the uniformly distributed rate matching pattern is 2. FIG. 1b is a schematic diagram of a rate matching pattern according to an embodiment of the disclosure. As shown in FIG. 1b, the rate matching pattern includes a large number of radio resources that are not actually occupied by the sensing reference signal. This may inevitably lead to the waste of radio resources, thereby reducing the spectrum efficiency.

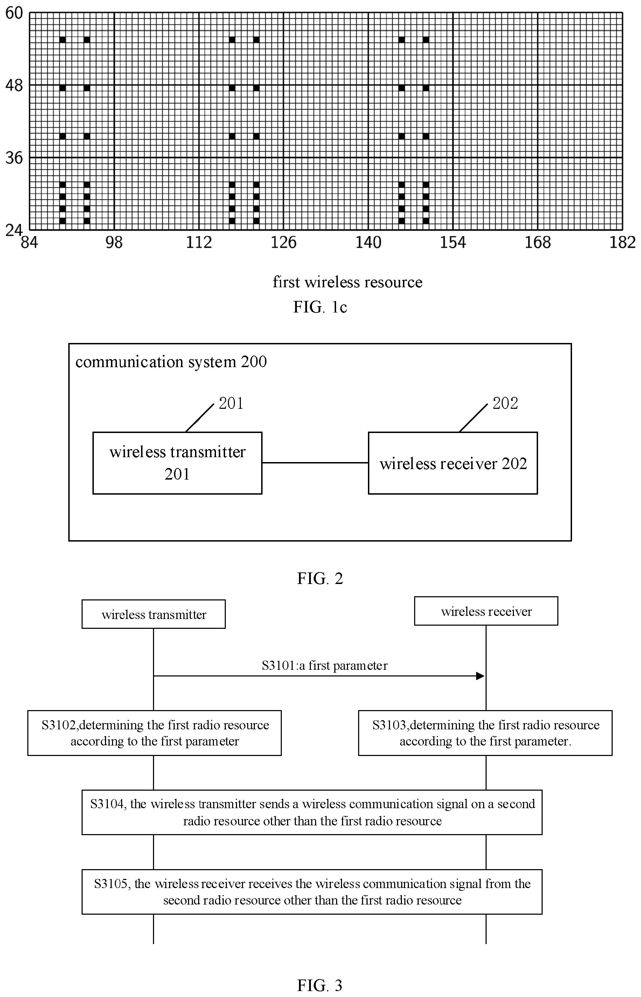

FIG. 2 is a schematic diagram of a communication system according to an embodiment of the disclosure. As shown in FIG. 2, a communication system 200 may include a wireless transmitter 201 and a wireless receiver 202.

In some embodiments, the wireless transmitter 201 may transmit and/or receive a wireless communication signal.

In some embodiments, the wireless receiver 202 may receive and/or transmit the wireless communication signal.

In some embodiments, the wireless transmitter 201 may transmit and/or receive a sensing reference signal.

In some embodiments, the wireless receiver 202 may receive and/or transmit the sensing reference signal.

In some embodiments, the wireless transmitter 201 may be an ISAC device. For example, the wireless transmitter 201 may be configured not only for the wireless sensing (e.g., transmitting the sensing reference signal) but also for the wireless communication (e.g., transmitting the wireless communication signal).

In some embodiments, the wireless receiver 202 may be an ISAC device. For example, the wireless receiver 202 may be configured not only for the wireless sensing (e.g., receiving the sensing reference signal) but also for the wireless communication (e.g., receiving the wireless communication signal).

In some embodiments, the wireless receiver 202 may be a non-ISAC device. For example, the wireless receiver 202 may receive the wireless communication signal.

It may be understood that the communication system 200 in the embodiments of the disclosure may be applied to various communication scenarios, such as communication between terminals, communication between a terminal and a network device, or communication between network devices, etc.

In some embodiments, the wireless transmitter 201 may be located in the terminal or the network device.

In some embodiments, the wireless receiver 202 may be located in the terminal or the network device.

In some embodiments, both the wireless transmitter 201 and the wireless receiver 202 may be located in the network device.

In some embodiments, the wireless transmitter 201 may be located in the network device, and the wireless receiver 202 may be located in the terminal.

In some embodiments, the wireless transmitter 201 may be located in the terminal, and the wireless receiver 202 may be located in the network device.

In some embodiments, both the wireless transmitter 201 and the wireless receiver 202 may be located in the terminal.

In some embodiments, the terminal includes, for example, at least one of a mobile phone, a wearable device, an Internet of Things (IoT) device, a vehicle with communication functions, an intelligent vehicle, a Pad, a computer with wireless transceiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the network device is, for example, the AN device. The AN device may include at least one of an evolved nodeB (eNB) in a 5G communication system, a next generation eNB (ng-eNB), a next generation nodeB (gNB), a node B (NB), a home nodeB (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (open RAN), a cloud base station (cloud RAN), a base station in other communication systems, and an access node in a wireless fidelity (Wi-Fi) system, but is not limited thereto.

It is understandable that the communication system described in the embodiments of the disclosure is for the purpose of more clearly illustrating the technical solutions of the embodiments of the disclosure, and does not constitute a limitation on the technical solutions proposed in the embodiments of the disclosure. As understood by those of ordinary skill in the art, with the evolution of system architectures and the emergence of new service scenarios, the technical solutions proposed in the embodiments of the disclosure are equally applicable to similar technical problems.

The following embodiments of the disclosure may be applied to the communication system 200 shown in FIG. 2, or some subjects in the communication system 200, but are not limited thereto. Each subject shown in FIG. 2 is an example. The communication system may include all or part of the entities in FIG. 2, e.g., the communication system may include at least one of the wireless transmitter and the wireless receiver, or may also include other subjects not shown in FIG. 2. The number and form of each subject are arbitrary, and each entity may be either physical or virtual. The connection relationships between subjects are exemplary. Each subject may be unconnected or connected, and the connection may be in any manner, either direct connection or indirect connection, wired connection or wireless connection.

The embodiments of the disclosure may be applied to long term evolution (LTE), LTE-advanced (LTE-A), LTE-beyond (LTE-B), SUPER 3G, international mobile telecommunications-advanced (IMT-Advanced), 4th generation mobile communication system (4G), 5th generation mobile communication system (5G), 5G new radio (NR), future radio access (FRA), new-radio access technology (new RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wide band (UWB), Bluetooth (registered trademark), public land mobile network (PLMN), device-to-device (D2D) system, machine to machine (M2M) system, internet of things (IoT) system, vehicle-to-everything (V2X), systems using other communication methods, next-generation systems extended based on them, etc. In addition, a plurality of systems may be combined (for example, a combination of LTE or LTE-A and 5G, etc.) for application.

FIG. 3 is an interaction diagram illustrating a communication method according to an embodiment of the disclosure. As shown in FIG. 3, an embodiment of the disclosure relates to the communication method. The above communication method includes:

At S3101, a wireless transmitter sends a first parameter to a wireless receiver.

In some embodiments, the first parameter is configured to determine a first radio resource unavailable for wireless communication. In some embodiments, the first radio resource includes an RE occupied by a sensing reference signal.

In some embodiments, the term "first radio resources" may be replaced with terms such as "rate matching pattern" or "RE occupied by the sensing reference signal".

In some embodiments, the first parameter may include a target parameter. In some embodiments, the target parameter may include at least one of the following parameters (a) to (h):

(a) An indication for a rate matching pattern type (patternType)

In some embodiments, the pattern Type = nested.

(b) A number N of OFDM subcarriers occupied in a frequency domain, where N is a positive integer
(c) A minimum subcarrier spacing ($K_{min}$), where $K_{min}$ is a positive integer
(d) An offset parameter of a subcarrier (Offset), where Offset is a positive integer

In some embodiments, the Offset may include at least one of:

a first offset k, where k is a non-negative integer smaller than $K_{min}$; or
a second offset ($K_{offset}$), where $K_{offset}$ indicates an offset of a starting PRB of the first radio resource relative to a CRB 0.

In some embodiments, the $K_{offset}$ may indicate a number of offset PRBs of the starting PRB of the first radio resources relative to the CRB 0.

In some embodiments, the $K_{offset}$ may indicate a number of offset subcarriers of the starting PRB of the first radio resources relative to the CRB 0, and thus the $K_{offset}$ may be a non-negative integer multiple of the number of subcarriers contained in a PRB.

(e) A slot period ($T_{slot}$), where $T_{slot}$ is a positive integer

In some embodiments, the $T_{slot}$ may be expressed as a number of time slots; for example, $T_{slot}=2$ indicates a period of every two time slots.

(f) A starting slot number ($s_0$), where $s_0$ is a positive integer
(g) A number of slots ($s_{num}$), where $s_{num}$ is a positive integer

In some embodiments, parameter (g) indicates the number of slots occupied by the first radio resources in a time domain.

(h) A set $\mathcal{L}$ of sequence numbers corresponding to OFDM symbols within a slot

In some embodiments, the wireless transmitter may generate at least one of the aforementioned parameters (a) to (h) based on the sensing reference signal pattern.

In some embodiments, the first parameter may include a parameter group number. The target parameter, such as at least one of the aforementioned parameters (a) to (h), may be determined according to the parameter group number.

In some embodiments, the wireless transmitter may send the first parameter to the wireless receiver via a signaling.

In some embodiments, the wireless transmitter may send the first parameter in the following manner (1) or (2).

Manner (1): Send the first parameter to the wireless receiver via a first signaling, where the first parameter includes the parameter group number.

In some embodiments, the first signaling may be a DCI signaling. For example, a new indication field is introduced in the existing DCI format or a new DCI format is defined.

In some embodiments, the wireless transmitter or the wireless communication network may pre-configure one or more groups of target parameters for the wireless receiver via a third signaling, denoted as parameter group 1, parameter group 2, ..., parameter group M, etc. One group of target parameters includes at least one of the aforementioned parameters (a) to (h). The wireless transmitter sends the first parameter via the first signaling to further dynamically indicate the target parameter. In some embodiments, the wireless transmitter sends the first parameter via the first signaling, where the first parameter includes one or more parameter group numbers, such as parameter group numbers 1 and 2, so that target parameters of the parameter group 1 and target parameters of the parameter group 2 are determined according to the first parameter.

According to the aforementioned embodiments, by pre-configuring one or more groups of target parameters in the wireless receiver to form a parameter group set, the wireless transmitter may dynamically select at least one group of target parameters from the parameter group set and send the corresponding parameter group number via the first signaling without having to transmit the target parameters themselves. Therefore, only a few bits of signaling need to be transmitted for indication.

In some embodiments, the third signaling may be an RRC signaling.

According to the aforementioned embodiments, one or more groups of target parameters may be pre-configured in the wireless receiver via the RRC signaling. The wireless transmitter may dynamically indicate the parameter group number via the DCI signaling, thereby indirectly indicating the target parameters.

Manner (2): Send the first parameter to the wireless receiver via a second signaling, where the first parameter includes the target parameter.

In some embodiments, the second signaling may be the RRC signaling.

According to the aforementioned embodiments, the wireless transmitter may directly send the target parameter to the wireless receiver via the RRC signaling.

At step S3102, the wireless transmitter determines the first radio resource according to the first parameter.

In some embodiments, the wireless transmitter determines a positions of the RE occupied by the sensing reference signal on the two-dimensional time-frequency resource grid according to the aforementioned first parameter, thereby determining the first radio resource.

In some embodiments, the OFDM subcarriers occupied by the first radio resource in the frequency domain are non-uniformly distributed. In some embodiments, the first radio resource non-uniformly distributed in the frequency domain is determined according to the aforementioned first parameter.

In some embodiments, the first radio resource is formed by nesting a plurality of uniform comb patterns with unequal frequency domain intervals. For example, the OFDM subcarriers occupied by the first radio resource in the frequency domain are determined based on a plurality of OFDM subcarrier position sets, OFDM subcarrier positions contained in one OFDM subcarrier position set are uniformly distributed based on a corresponding frequency domain interval, and frequency domain intervals respectively corresponding to the plurality of OFDM subcarrier position sets are different.

Herein, the plurality of OFDM subcarrier position sets may refer to two or more OFDM subcarrier position sets. In some examples, the plurality of OFDM subcarrier position sets may specifically be two OFDM subcarrier position sets.

In some embodiments, a set S of positions of the OFDM subcarriers occupied by the first radio resource in the frequency domain satisfies one of:

$$S = \left\{ nK_{min} + Offset \mid n = 0, \cdots, \left\lfloor \frac{N}{2} \right\rfloor \right\} \cup \left\{ \left( n \left\lfloor \frac{N}{2} \right\rfloor + n - 1 \right) K_{min} + Offset \mid n = 1, \cdots, \left\lceil \frac{N}{2} \right\rceil \right\} \qquad (1)$$

$$S = \left\{ nK_{min} + Offset \mid n = 0, \cdots, \left\lfloor \frac{N}{2} \right\rfloor - 1 \right\} \cup \left\{ \left( n \left\lfloor \frac{N}{2} \right\rfloor + n - 1 \right) K_{min} + Offset \mid n = 1, \cdots, \left\lceil \frac{N}{2} \right\rceil \right\} \qquad (2)$$

$$S = \left\{ nK_{min} + Offset \mid n = 0, \cdots, \left\lfloor \frac{N}{2} \right\rfloor \right\} \cup \left\{ \left[ (n+1) \left\lfloor \frac{N}{2} \right\rfloor + n \right] K_{min} + Offset \mid n = 1, \cdots, \left\lceil \frac{N}{2} \right\rceil - 1 \right\} \qquad (3)$$

Taking formula (3) as an example, assuming that N=7, $K_{min}$= 2, and Offset=25, the set of positions of the OFDM subcarriers occupied by the first radio resource in the frequency domain may be obtained as follows: S={25,27,29,31} U {39,47,55}={25,27,29,31,39,47,55}.

According to the aforementioned embodiments, sequence numbers of the OFDM subcarriers occupied by the first radio resource in the frequency domain may be determined in the embodiments of the disclosure based on parameters (b) to (d) and one of the aforementioned formulas.

Further, sequence numbers of the time slots occupied by the first radio resource in the time domain and sequence numbers of the OFDM symbols may be determined based on parameters (e) to (h).

It may be understood that the first radio resource is determined based on the sequence numbers of the OFDM subcarriers occupied in the frequency domain, the sequence numbers of the time slots occupied in the time domain, and the sequence numbers of the OFDM symbols. FIG. 1c is a schematic diagram of the first radio resource according to an embodiment of the disclosure. By comparing FIG. 1a and FIG. 1c, it may be seen that the first radio resource determined according to the aforementioned first parameter in the embodiments of the disclosure is completely identical to the sensing reference signal pattern.

In some embodiments, steps S3101 and S3102 may be performed in reverse order or simultaneously.

At step S3103, the wireless receiver determines the first radio resource according to the first parameter.

In some embodiments, the manner in which the wireless receiver determines the first radio resource according to the first parameter is the same as the manner in which the wireless transmitter determines the first radio resource. Therefore, for optional implementations of step S3103, reference may be made to the optional implementations of step S3102 and other relevant parts in the embodiments related to FIG. 3, which are not repeated herein.

At step S3104, the wireless transmitter sends a wireless communication signal on a second radio resource other than the first radio resource.

In some embodiments, the wireless transmitter maps the wireless communication signal (including the data payload and/or the reference signal for the wireless communication, etc.) onto the second radio resource other than the first radio resource, and transmits the wireless communication signal.

At step S3105, the wireless receiver receives the wireless communication signal from the second radio resource other than the first radio resource.

In the aforementioned embodiments, the wireless transmitter sends the first parameter to the wireless receiver, and both the wireless transmitter and the wireless receiver determine the first radio resource (e.g., rate matching pattern) non-uniformly distributed in the frequency domain according to the aforementioned first parameter, and transmit/receive the wireless communication signal based on the first radio resource, i.e., perform the rate match. Compared with the rate matching pattern uniformly distributed in the frequency domain, the waste of radio resources may be reduced and the spectrum efficiency may be improved.

Moreover, according to the aforementioned optional implementations, the determined first radio resource (e.g., rate matching pattern) is identical to the sensing reference signal pattern, which may avoid the waste of radio resources and prevent the interference between the wireless communication system and the wireless sensing system.

The communication method involved in the embodiments of the disclosure may include at least one of the aforementioned steps S3101 to S3105. For example, step S3101 may be implemented as an independent embodiment; steps S3101 + S3102 + S3104 may be implemented as an independent embodiment; steps S3101 + S3103 + S3105 may be implemented as an independent embodiment, but it is not limited thereto.

In some embodiments, steps S3102 to S3105 are optional, and one or more of these steps may be omitted or replaced in different embodiments.

In some embodiments, steps S3103 and S3105 are optional, and one or more of these steps may be omitted or replaced in different embodiments.

In some embodiments, steps S3102 and S3104 are optional, and one or more of these steps may be omitted or replaced in different embodiments.

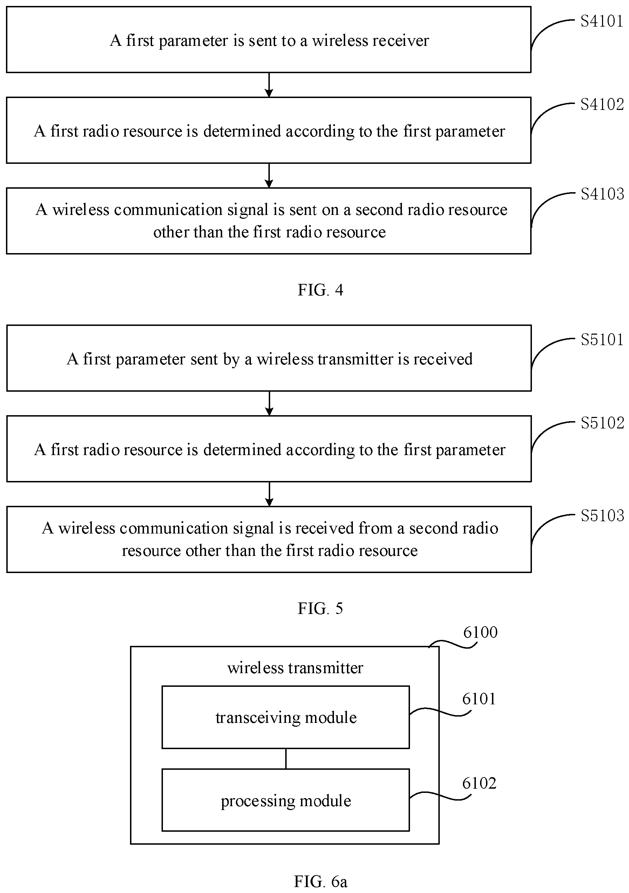

FIG. 4 is a flow chart of a communication method according to an embodiment of the disclosure. As shown in FIG. 4, an embodiment of the disclosure relates to the communication method, executed by a wireless transmitter, and the method includes the following steps.

At step S4101, a first parameter is sent to a wireless receiver.

In some embodiments, the first parameter is configured to determine a first radio resource unavailable for wireless communication. In some embodiments, the first radio resource includes an RE occupied by a sensing reference signal.

In some embodiments, the first parameter may include a target parameter. In some embodiments, the target parameter may include at least one of the following parameters (a) to (h):

(a) An indication for a rate matching pattern type (patternType)
(b) A number N of OFDM subcarriers occupied in a frequency domain
(c) A minimum subcarrier spacing ($K_{min}$)
(d) An offset parameter of a subcarrier (Offset)

In some embodiments, the Offset may include at least one of:

a first offset k, where k is a non-negative integer smaller than $K_{min}$; or
a second offset ($K_{offset}$), where $K_{offset}$ indicates an offset of a starting PRB of the first radio resource relative to a CRB 0.
(e) A slot period ($T_{slot}$), where $T_{slot}$ is a positive integer

In some embodiments, the $T_{slot}$ may be expressed as a number of time slots; for example, $T_{slot}=2$ indicates a period of every two time slots.

(f) A starting slot number ($s_0$)
(g) A number of slots ($s_{num}$)

(h) A set $\mathcal{L}$ of sequence numbers corresponding to OFDM symbols within a slot

In some embodiments, the wireless transmitter may generate at least one of the aforementioned parameters (a) to (h) based on the sensing reference signal pattern.

In some embodiments, the first parameter may include a parameter group number. The target parameter, such as at least one of the aforementioned parameters (a) to (h), may be determined according to the parameter group number.

In some embodiments, the wireless transmitter may send the first parameter to the wireless receiver via a signaling.

**In** some embodiments, the wireless transmitter may send the first parameter in the following manner (1) or (2).

Manner (1): Send the first parameter to the wireless receiver via a first signaling, where the first parameter includes the parameter group number.

In some embodiments, the first signaling may be a DCI signaling. For example, a new indication field is introduced in the existing DCI format or a new DCI format is defined.

In some embodiments, the wireless transmitter or the wireless communication network may pre-configure one or more groups of target parameters for the wireless receiver via a third signaling, denoted as parameter group 1, parameter group 2, ..., parameter group M, etc. One group of target parameters includes at least one of the aforementioned parameters (a) to (h). The wireless transmitter sends the first parameter via the first signaling to further dynamically indicate the target parameter. In some embodiments, the wireless transmitter sends the first parameter via the first signaling, where the first parameter includes one or more parameter group numbers, such as parameter group numbers 1 and 2, so that target parameters of the parameter group 1 and target parameters of the parameter group 2 are determined according to the first parameter.

In some embodiments, the third signaling may be an RRC signaling.

Manner (2): Send the first parameter to the wireless receiver via a second signaling, where the first parameter includes the target parameter.

In some embodiments, the second signaling may be the RRC signaling.

For optional implementations of step S4101, reference may be made to the optional implementations of step S3101 in FIG. 3 and other relevant parts in the embodiments related to FIG. 3, which are not repeated herein.

At step S4102, the first radio resource is determined according to the first parameter.

In some embodiments, the wireless transmitter determines a positions of the RE occupied by the sensing reference signal on the two-dimensional time-frequency resource grid according to the aforementioned first parameter, thereby determining the first radio resource.

In some embodiments, the OFDM subcarriers occupied by the first radio resource in the frequency domain are non-uniformly distributed. In some embodiments, the first radio resource non-uniformly distributed in the frequency domain is determined according to the aforementioned first parameter.

In some embodiments, the first radio resource is formed by nesting a plurality of uniform comb patterns with unequal frequency domain intervals. For example, the OFDM subcarriers occupied by the first radio resource in the frequency domain are determined based on a plurality of OFDM subcarrier position sets, OFDM subcarrier positions contained in one OFDM subcarrier position set are uniformly distributed based on a corresponding frequency domain interval, and frequency domain intervals respectively corresponding to the plurality of OFDM subcarrier position sets are different.

Herein, the plurality of OFDM subcarrier position sets may refer to two or more OFDM subcarrier position sets. In some examples, the plurality of OFDM subcarrier position sets may specifically be two OFDM subcarrier position sets.

In some embodiments, a set S of positions of the OFDM subcarriers occupied by the first radio resource in the frequency domain satisfies one of:

$$S = \left\{ nK_{min} + Offset \mid n = 0,\cdots, \left\lfloor \frac{N}{2} \right\rfloor \right\} \cup \left\{ \left( n\left\lfloor \frac{N}{2} \right\rfloor + n - 1 \right) K_{min} + Offset \mid n = 1,\cdots, \left\lceil \frac{N}{2} \right\rceil \right\} \tag{1}$$

$$S = \left\{ nK_{min} + Offset \mid n = 0,\cdots, \left\lfloor \frac{N}{2} \right\rfloor - 1 \right\} \cup \left\{ \left( n\left\lfloor \frac{N}{2} \right\rfloor + n - 1 \right) K_{min} + Offset \mid n = 1,\cdots, \left\lceil \frac{N}{2} \right\rceil \right\} \tag{2}$$

$$S = \left\{ nK_{min} + Offset \mid n = 0,\cdots, \left\lfloor \frac{N}{2} \right\rfloor \right\} \cup \left\{ \left[ (n+1)\left\lfloor \frac{N}{2} \right\rfloor + n \right] K_{min} + Offset \mid n = 1,\cdots, \left\lceil \frac{N}{2} \right\rceil - 1 \right\} \tag{3}$$

For optional implementations of step S4102, reference may be made to the optional implementations of step S3102 in FIG. 3 and other relevant parts in the embodiments related to FIG. 3, which are not repeated herein.

In some embodiments, steps S4101 and S4102 may be performed in reverse order or simultaneously.

At step S4103, a wireless communication signal is sent on a second radio resource other than the first radio resource.

In some embodiments, the wireless transmitter maps the wireless communication signal (including the data payload and/or the reference signal for the wireless communication, etc.) onto the second radio resource other than the first radio resources, and transmits the wireless communication signal.

According to the aforementioned embodiments, the wireless transmitter determines the first radio resource (e.g., rate matching pattern) non-uniformly distributed in the frequency domain according to the first parameter, and transmits the wireless communication signal based on the first radio resource. That is, when performing resource mapping of the wireless communication signal, the wireless transmitter skips (avoids) the first radio resource, and sends the first parameter to the wireless receiver, so as to facilitate the wireless receiver to determine the first radio resource based on the first parameter and skip (avoid) the first radio resource when receiving the wireless communication signal. Compared with the rate matching pattern uniformly distributed in the frequency domain, the embodiments of the disclosure may reduce the waste of radio resources and improve the spectrum efficiency.

The communication method involved in the disclosure may include at least one of the aforementioned steps S4101 to S4103. For example, step S4101 may be implemented as an independent embodiment, step S4102 may be implemented as an independent embodiment, and step S4103 may be implemented as an independent embodiment. In different embodiments, one or more of steps S4101 to S4103 may be omitted or replaced.

FIG. 5 is a flowchart of a communication method according to an embodiment of the disclosure. As shown in FIG. 5, an embodiment of the disclosure relates to the communication method, executed by a wireless receiver, and the method includes the following steps.

At step S5101, a first parameter sent by a wireless transmitter is received.

In some embodiments, the first parameter is configured to determine a first radio resource unavailable for wireless communication. In some embodiments, the first radio resource includes an RE occupied by a sensing reference signal.

In some embodiments, the first parameter may include a target parameter. In some embodiments, the target parameter may include at least one of the following parameters (a) to (h):

(a) An indication for a rate matching pattern type (patternType)
(b) A number N of OFDM subcarriers occupied in a frequency domain
(c) A minimum subcarrier spacing ($K_{min}$)
(d) An offset parameter of a subcarrier (Offset)

In some embodiments, the Offset may include at least one of:

a first offset k, where k is a non-negative integer smaller than $K_{min}$; or
a second offset ($K_{offset}$), where $K_{offset}$ indicates an offset of a starting PRB of the first radio resource relative to a CRB 0.
(e) A slot period ($T_{slot}$), where $T_{slot}$ is a positive integer

**In** some embodiments, the $T_{slot}$ may be expressed as a number of time slots; for example, $T_{slot}=2$ indicates a period of every two time slots.

(f) A starting slot number ($s_0$)
(g) A number of slots ($s_{num}$)

(h) A set $\mathcal{L}$ of sequence numbers corresponding to OFDM symbols within a slot

In some embodiments, the first parameter may include a parameter group number. The target parameter, such as at least one of the aforementioned parameters (a) to (h), may be determined according to the parameter group number.

In some embodiments, the wireless receiver may receive the first parameter sent by the wireless transmitter via a signaling.

In some embodiments, the wireless receiver may receive the first parameter in the following manner (1) or (2).

Manner (1): Receive the first parameter sent by the wireless transmitter via a first signaling, where the first parameter includes the parameter group number.

In some embodiments, the first signaling may be a DCI signaling. For example, a new indication field is introduced in the existing DCI format or a new DCI format is defined.

Manner (2): Receive the first parameter sent by the wireless transmitter via a second signaling, where the first parameter includes the target parameter.

In some embodiments, the second signaling may be the RRC signaling.

For optional implementations of step S5101, reference may be made to the optional implementations of step S3101 in FIG. 3 and other relevant parts in the embodiments related to FIG. 3, which are not repeated herein.

At step S5102, the first radio resource is determined according to the first parameter.

In some embodiments, the wireless receiver determines a positions of the RE occupied by the sensing reference signal on the two-dimensional time-frequency resource grid according to the aforementioned first parameter, thereby determining the first radio resource.

In some embodiments, the OFDM subcarriers occupied by the first radio resource in the frequency domain are non-uniformly distributed. In some embodiments, the first radio resource non-uniformly distributed in the frequency domain is determined according to the aforementioned first parameter.

In some embodiments, the first radio resource is formed by nesting a plurality of uniform comb patterns with unequal frequency domain intervals. For example, the OFDM subcarriers occupied by the first radio resource in the frequency domain are determined based on a plurality of OFDM subcarrier position sets, OFDM subcarrier positions contained in one OFDM subcarrier position set are uniformly distributed based on a corresponding frequency domain interval, and frequency domain intervals respectively corresponding to the plurality of OFDM subcarrier position sets are different.

Herein, the plurality of OFDM subcarrier position sets may refer to two or more OFDM subcarrier position sets. In some examples, the plurality of OFDM subcarrier position sets may specifically be two OFDM subcarrier position sets.

In some embodiments, a set S of positions of the OFDM subcarriers occupied by the first radio resource in the frequency domain satisfies one of:

$$S = \left\{ nK_{min} + Offset \mid n = 0, \cdots, \left\lfloor \frac{N}{2} \right\rfloor \right\} \cup \left\{ \left( n \left\lfloor \frac{N}{2} \right\rfloor + n - 1 \right) K_{min} + Offset \mid n = 1, \cdots, \left\lceil \frac{N}{2} \right\rceil \right\} \qquad (1)$$

$$S = \left\{ nK_{min} + Offset \mid n = 0, \cdots, \left\lfloor \frac{N}{2} \right\rfloor - 1 \right\} \cup \left\{ \left( n \left\lfloor \frac{N}{2} \right\rfloor + n - 1 \right) K_{min} + Offset \mid n = 1, \cdots, \left\lceil \frac{N}{2} \right\rceil \right\} \qquad (2)$$

$$S = \left\{ nK_{min} + Offset \mid n = 0, \cdots, \left\lfloor \frac{N}{2} \right\rfloor \right\} \cup \left\{ \left[ (n+1) \left\lfloor \frac{N}{2} \right\rfloor + n \right] K_{min} + Offset \mid n = 1, \cdots, \left\lceil \frac{N}{2} \right\rceil - 1 \right\} \qquad (3)$$

For optional implementations of step S5102, reference may be made to the optional implementations of step S3103 and other relevant parts in the embodiments related to FIG. 3 (e.g., the optional implementations of step S3102), which will not be repeated herein.

At step S5103, a wireless communication signal is received from a second radio resource other than the first radio resource.

In some embodiments, the wireless receiver skips the first radio resource when receiving the wireless communication signal.

According to the aforementioned embodiments, the wireless receiver determines the first radio resource (e.g., rate matching pattern) non-uniformly distributed in the frequency domain based on the first parameter, and receives the wireless communication signal according to the first radio resource, i.e., skips (avoids) the first radio resource when receiving the wireless communication signal. Compared with the rate matching pattern uniformly distributed in the frequency domain, the embodiments of the disclosure may reduce the waste of radio resources and improve the spectrum efficiency.

The embodiments of the disclosure provide a rate matching pattern and a rate matching method applicable to the nested-pattern sensing reference signal. The core concept of the embodiments of the disclosure is as follows.

At step 1, to indicate that the RE occupied by the nested-pattern sensing reference signal is unavailable to the wireless communication system, a new rate matching pattern or a new RRC information element are defined based on at least one of the following parameters. For example, 1) a new pattern Type is defined in RateMatchPattern in TS 38.331; or 2) a new RRC information element RateMatchPattern-Nested is defined in TS 38.331.

(a) The indication for the rate matching pattern type: pattern Type = nested
(b) The number N of OFDM subcarriers occupied in the frequency domain (also referred to as a sequence length)
(c) $K_{min}$

(d1) The first offset (k), where k is a non-negative integer smaller than $K_{min}$

(d2) The second offset ($K_{offset}$), where $K_{offset}$ indicates the offset of the starting PRB of the rate matching pattern relative to the CRB 0.

In some embodiments, $K_{offset}$ may indicate the number of offset PRBs or the number of offset subcarriers of the starting PRB of the rate matching pattern relative to the CRB 0.

(e) $T_{slot}$

(f) $s_0$

(g) $s_{num}$,

(h) The set $\mathcal{L}$ of sequence numbers corresponding to OFDM symbols within a slot

At step 2, the wireless transmitter generates a parameter of the rate matching pattern described in step 1 and notifies the wireless receiver of the parameter via a signaling. In some embodiments, the wireless transmitter may send at least one group of rate matching pattern parameters or the parameter group number(s) corresponding to at least one group of rate matching pattern parameters to the wireless receiver in accordance with manner (1) or manner (2) provided in step S3101 of FIG. 3. One group of rate matching pattern parameters includes at least one of parameters (a) to (h) described in Step 1.

At step 3, the wireless transmitter maps the wireless communication signal (including the data payload and/or the reference signal for the wireless communication, etc.) onto radio resources other than the RE occupied by the sensing reference signal (indicated by the rate matching pattern described in step 1), and transmits the wireless communication signal.

At step 4, the wireless receiver receives the rate matching pattern parameter(s) or the parameter group number(s) described in step 2, and determines the position of the RE occupied by the sensing reference signal on the two-dimensional time-frequency resource grid accordingly.

At step 5, the wireless receiver performs the rate match on the RE described in step 4 when receiving the wireless communication signal, i.e., skips the aforementioned RE and does not receive the wireless communication signal on the RE.

An illustrative embodiment is provided below for explanation:

In an ISAC system, the sensing reference signal adopts a nested pattern with a sequence length N=7, as shown in FIG. 1a. The wireless transmitter generates the rate matching pattern shown in FIG. 1c, and notifies the wireless receiver of the following rate matching pattern parameters via the RRC signaling. When performing resource mapping for the wireless communication signal, the wireless transmitter maps the wireless communication signal (including the data payload and/or the reference signal for the wireless communication, etc.) onto radio resources other than the RE occupied by the sensing reference signal (indicated by the rate matching pattern), and transmits the wireless communication signal, i.e., performs the rate match. Correspondingly, the wireless receiver determines the position of the RE occupied by the sensing reference signal on the two-dimensional time-frequency resource grid according to the rate matching pattern parameters sent by the wireless transmitter, and skips the aforementioned RE when receiving communication data, i.e., does not detect received signals on the aforementioned RE.

**According** to the rate matching pattern shown in FIG. 1c, the rate matching pattern parameters are as follows:

$$\text{RateMatchPattern-Nested} =$$

$$\{$$

$$\text{patternType} = \text{nested};$$

$$N = 7;$$

$$K_{min}=2;$$

$$k=1;$$

$$K_{\text{offset}}=24;$$

$$T_{\text{slot}}=2;$$

$$s_0=6;$$

$$s_{\text{num}}=3;$$

$$\mathcal{L}=\{5,9\};$$

$$\}$$

The embodiments of the disclosure further provide an apparatus for implementing any of the foregoing methods. For example, an apparatus is provided, where the apparatus includes units or modules configured to implement each step performed by the wireless transmitter in any of the foregoing methods. For another example, another apparatus is provided, including units or modules configured to implement each step performed by the wireless receiver in any of the foregoing methods.

It should be understood that the division of units or modules in the above apparatus is merely a logical function division. In actual implementation, all or part of units or modules may be integrated into a single physical entity, or may be physically separated. In addition, the units or modules in the apparatus may be implemented in the form of a processor invoking software: for example, the apparatus includes a processor connected to a memory, where instructions are stored in the memory, and the processor invokes the instructions stored in the memory to implement any of the above methods or the functions of each unit or module of the above apparatus. The processor may be a general-purpose processor, such as a central processing unit (CPU) or a microprocessor, and the memory may be an internal memory of the apparatus or an external memory of the apparatus. Alternatively, the units or modules in the apparatus may be implemented in the form of hardware circuits, and the functions of some or all units or modules may be implemented through the design of hardware circuits. The above hardware circuits may be understood as one or more processors; for example, in one implementation, the hardware circuits are application-specific integrated circuits (ASICs), and the functions of some or all of the above units or modules are implemented through the design of logical relationships between components in the circuits; for another example, in another implementation, the hardware circuits may be implemented through programmable logic devices (PLDs). Taking field programmable gate arrays (FPGAs) as an example, they may include a large number of logic gate circuits, and the connection relationships between the logic gate circuits are configured through configuration files to implement the functions of some or all of the above units or modules. All units or modules of the above apparatus may be fully implemented in the form of a processor invoking software, fully implemented in the form of hardware circuits, or partially implemented in the form of a processor invoking software and the remaining part implemented in the form of hardware circuits.

In the embodiments of the disclosure, the processor is a circuit with signal processing capability. In one implementation, the processor may be a circuit with instruction reading and running capabilities, such as a CPU, a microprocessor, a graphics processing unit (GPU) (which may be understood as a microprocessor), or a digital signal processor (DSP). In another implementation, the processor may implement certain functions through the logical relationship of hardware circuits, where the logical relationship of the hardware circuits is fixed or reconfigurable. For example, the processor is a hardware circuit implemented by an application-specific integrated circuit (ASIC) or a programmable logic device (PLD), such as an FPGA. In a reconfigurable hardware circuit, the process in which the processor loads a configuration file to implement hardware circuit configuration may be understood as the process in which the processor loads instructions to implement the functions of some or all of the above units or modules. In addition, the processor may also be a hardware circuit designed for artificial intelligence, which may be understood as an ASIC, such as a neural network processing unit (NPU), a tensor processing unit (TPU), or a deep learning processing unit (DPU).

Fig. 6a is a schematic diagram of a wireless transmitter proposed in an embodiment of the disclosure. As shown in Fig. 6a, the wireless transmitter 6100 may include at least one of a transceiving module 6101, a processing module 6102, and the like. In some embodiments, the aforesaid transceiving module is configured to send the first parameter to the wireless receiver. In some embodiments, the aforesaid transceiving module is configured to send the wireless communication signal on the second radio resource other than the first radio resource. In some embodiments, the aforesaid transceiving module is configured to perform at least one of the communication steps such as sending and/or receiving performed by the wireless transmitter in the aforementioned method (e.g., step S3101, step S3104, but not limited thereto), which are not repeated herein. In some embodiments, the aforesaid processing module is configured to perform at least one of the other steps performed by the wireless transmitter in the aforementioned method (e.g., step S3102, but not limited thereto), which are not repeated herein.

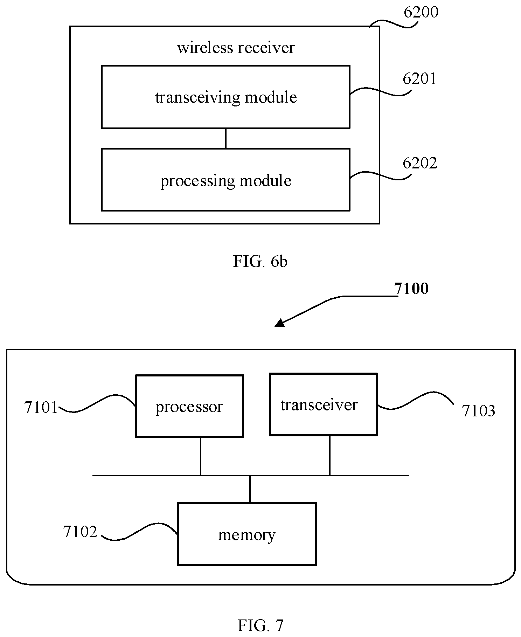

Fig. 6b is a schematic diagram of a wireless receiver proposed in an embodiment of the disclosure. As shown in Fig. 6b, the wireless receiver 6200 may include at least one of a transceiving module 6201, a processing module 6202, and the like. In some embodiments, the aforesaid transceiving module is configured to receive the first parameter sent by the wireless transmitter. In some embodiments, the aforesaid processing module is configured to determine the first radio resource according to the first parameter. In some embodiments, the aforesaid transceiving module is configured to receive the wireless communication signal on the second radio resource other than the first radio resource. In some embodiments, the aforesaid transceiving module is configured to perform at least one of the communication steps such as sending and/or receiving performed by the wireless receiver in the aforementioned method (e.g., step S3105, but not limited thereto), which are not repeated herein. In some embodiments, the aforesaid processing module is configured to perform at least one of the other steps performed by the wireless receiver in the aforementioned method (e.g., step S3103, but not limited thereto), which are not repeated herein.

In some embodiments, the transceiving module may include a transmitting module and/or a receiving module; the transmitting module and the receiving module may be separate or integrated together. In some embodiments, the transceiving module may be used interchangeably with a transceiver.

In some embodiments, the processing module may be a single module or include a plurality of sub-modules. In some embodiments, the aforementioned plurality of sub-modules respectively perform all or part of the steps required to be executed by the processing module. In some embodiments, the processing module may be used interchangeably with a processor.

FIG. 7 is a schematic diagram of a communication device proposed in an embodiment of the disclosure. The communication device 7100 may be a network device (e.g., an access network device, etc.), a terminal (e.g., a UE, etc.), a chip, a chip system, or a processor configured to support the network device in implementing any of the aforementioned methods, or a chip, a chip system, or a processor configured to support the terminal in implementing any of the aforementioned methods. The communication device 7100 may be configured to implement the methods described in the above method embodiments, and specific reference may be made to the descriptions in the above method embodiments.

As shown in Fig. 7, the communication device 7100 includes one or more processors 7101. The processor 7101 may be a general-purpose processor, a special-purpose processor, or the like, for example, a baseband processor or a CPU. The communication device 7100 is configured to perform any of the aforementioned methods. In some embodiments, the communication device 7100 may be configured to perform all or part of the steps of the communication method performed by the wireless transmitter in the aforesaid embodiments. In some embodiments, the communication device 7100 may be configured to perform all or part of the steps of the communication method performed by the wireless receiver in the aforesaid embodiments.

In some embodiments, the communication device 7100 further includes one or more memories 7102 for storing instructions. In some embodiments, all or part of the memory 7102 may also be located outside the communication device 7100.

In some embodiments, the communication device 7100 further includes one or more transceivers 7103. When the communication device 7100 includes one or more transceivers 7103, the transceiver 7103 performs at least one of the communication steps such as sending and/or receiving in the aforementioned methods (e.g., step S3101, step S3104, step S3105, but not limited thereto), and the processor 7101 performs at least one of the other steps (e.g., step S3102, step S3103, but not limited thereto).

In some embodiments, the transceiver may include a receiver and/or a transmitter, which may be separate or integrated. In some embodiments, terms such as transceiver, transceiver unit, transceiver machine, and transceiver circuit may be replaced with each other, and terms such as transmitter, transmission unit, transmitter machine, and transmission circuit may be replaced with each other, and terms such as receiver, receiving unit, receiver machine, and receiving circuit may be replaced with each other.

In some embodiments, the communication device 7100 may include one or more interface circuits. In some embodiments, the interface circuit is connected to the memory 7102, and may be configured to receive signals from the memory 7102 or other devices, and to send signals to the memory 7102 or other devices. For example, the interface circuit may read the instructions stored in the memory 7102 and send the instructions to the processor 7101. In some embodiments, the terms such as interface circuit, interface, transceiving pin, and transceiver may be used interchangeably.

The communication device 7100 described in the foregoing embodiments may be a network device or a terminal, but the scope of the communication device 7100 described in the disclosure is not limited thereto, and the structure of the communication device 7100 may not be restricted by that shown in Fig. 7. The communication device may be an independent device or part of a larger device. For example, the communication device may be: 1) an independent integrated circuit (IC), a chip, or a chip system or subsystem; (2) a collection of one or more ICs, in some embodiments, the above IC collection may also include a storage component for storing data and programs; (3) an ASIC, such as a modem; (4) a module embeddable in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others.

The disclosure further provides a storage medium on which instructions are stored. When the instructions are run on the communication device 7100, the communication device 7100 is caused to execute any of the above methods. In some embodiments, the storage medium is an electronic storage medium. In some embodiments, the storage medium is a computer-readable storage medium, but it is not limited thereto, and may also be a storage medium readable by other apparatuses. In some embodiments, the storage medium is a non-transitory storage medium, but it is not limited thereto, and may also be a transitory storage medium.

The disclosure further provides a program product. When the program product is executed by the communication device 7100, the communication device 7100 is caused to execute any of the above methods. In some embodiments, the program product is a computer program product.

The disclosure further provides a computer program which, when run on a computer, causes the computer to execute any of the above methods.

**Claims**

1. A communication method, performed by a wireless transmitter, comprising:

   sending a first parameter to a wireless receiver, wherein the first parameter is configured to determine a first radio resource unavailable for wireless communication, and orthogonal frequency division multiplexing (OFDM) subcarriers occupied by the first radio resource in a frequency domain are non-uniformly distributed; and
   sending a wireless communication signal on a second radio resource other than the first radio resource.

2. The communication method according to claim 1, wherein the OFDM subcarriers occupied by the first radio resource in the frequency domain are determined based on a plurality of OFDM subcarrier position sets, OFDM subcarrier positions contained in one OFDM subcarrier position set are uniformly distributed based on a corresponding frequency domain interval, and frequency domain intervals respectively corresponding to the plurality of OFDM subcarrier position sets are different.

3. The communication method according to claim 1 or 2, wherein the first parameter comprises at least one of:

   a number N of OFDM subcarriers occupied in the frequency domain;
   a minimum subcarrier spacing ($K_{min}$);
   an offset parameter of a subcarrier (Offset);
   a slot period ($T_{slot}$);
   a starting slot number ($s_0$);
   a number of slots ($s_{num}$); or

   a set $\mathcal{L}$ of sequence numbers corresponding to OFDM symbols within a slot.

4. The communication method according to claim 3, wherein the Offset comprises at least one of:

   an offset of a non-negative integer smaller than the $K_{min}$; or
   an offset of a starting physical resource block (PRB) of the first radio resource relative to a common resource block (CRB) 0.

5. The communication method according to claim 3 or 4, wherein a set S of positions of the OFDM subcarriers occupied by the first radio resource in the frequency domain satisfies one of:

$$S = \left\{ nK_{min} + Offset \mid n = 0, \cdots, \left\lfloor \frac{N}{2} \right\rfloor \right\} \cup \left\{ \left( n \left\lfloor \frac{N}{2} \right\rfloor + n - 1 \right) K_{min} + Offset \mid n = 1, \cdots, \left\lceil \frac{N}{2} \right\rceil \right\} ;$$

$$S = \left\{ nK_{min} + Offset \mid n = 0, \cdots, \left\lfloor \frac{N}{2} \right\rfloor - 1 \right\} \cup \left\{ \left( n \left\lfloor \frac{N}{2} \right\rfloor + n - 1 \right) K_{min} + Offset \mid n = 1, \cdots, \left\lceil \frac{N}{2} \right\rceil \right\} ;$$

and

$$S = \left\{ nK_{min} + Offset \mid n = 0, \cdots, \left\lfloor \frac{N}{2} \right\rfloor \right\} \cup \left\{ \left[ (n+1) \left\lfloor \frac{N}{2} \right\rfloor + n \right] K_{min} + Offset \mid n = 1, \cdots, \left\lceil \frac{N}{2} \right\rceil - 1 \right\} .$$

6. The communication method according to any one of claims 1 to 5, wherein sending the first parameter to the wireless receiver comprises:

   sending the first parameter to the wireless receiver via downlink control information (DCI), wherein the first parameter comprises a parameter group number; or
   sending the first parameter to the wireless receiver via a radio resource control (RRC) signaling.

7. A communication method, performed by a wireless receiver, comprising:

   receiving a first parameter sent by a wireless transmitter;
   determining a first radio resource according to the first parameter, wherein orthogonal frequency division multiplexing (OFDM) subcarriers occupied by the first radio resource in a frequency domain are non-uniformly distributed; and
   receiving a wireless communication signal from a second radio resource other than the first radio resource.

8. The communication method according to claim 7, wherein the OFDM subcarriers occupied by the first radio resource in the frequency domain are determined based on a plurality of OFDM subcarrier position sets, OFDM subcarrier positions contained in one OFDM subcarrier position set are uniformly distributed based on a corresponding frequency domain interval, and frequency domain intervals respectively corresponding to the plurality of OFDM subcarrier position sets are different.

9. The communication method according to claim 7 or 8, wherein the first parameter comprises at least one of:

   a number N of OFDM subcarriers occupied in the frequency domain;
   a minimum subcarrier spacing ($K_{min}$);
   an offset parameter of a subcarrier (Offset);
   a slot period ($T_{slot}$);
   a starting slot number ($s_0$);
   a number of slots ($s_{num}$); or

   a set $\mathcal{L}$ of sequence numbers corresponding to OFDM symbols within a slot.

10. The communication method according to claim 9, wherein the Offset comprises at least one of:

    an offset of a non-negative integer smaller than the $K_{min}$; or
    an offset of a starting physical resource block (PRB) of the first radio resource relative to a common resource block (CRB) 0.

11. The communication method according to claim 9 or 10, wherein a set S of positions of the OFDM subcarriers occupied by the first radio resource in the frequency domain satisfies one of:

$$S = \left\{ nK_{min} + Offset \mid n = 0, \cdots, \left\lfloor \frac{N}{2} \right\rfloor \right\} \cup \left\{ \left( n \left\lfloor \frac{N}{2} \right\rfloor + n - 1 \right) K_{min} + Offset \mid n = 1, \cdots, \left\lceil \frac{N}{2} \right\rceil \right\} ;$$

$$S = \left\{ nK_{min} + Offset \mid n = 0, \cdots, \left\lfloor \frac{N}{2} \right\rfloor - 1 \right\} \cup \left\{ \left( n \left\lfloor \frac{N}{2} \right\rfloor + n - 1 \right) K_{min} + Offset \mid n = 1, \cdots, \left\lceil \frac{N}{2} \right\rceil \right\};$$

and

$$S = \left\{ nK_{min} + Offset \mid n = 0, \cdots, \left\lfloor \frac{N}{2} \right\rfloor \right\} \cup \left\{ \left[ (n+1) \left\lfloor \frac{N}{2} \right\rfloor + n \right] K_{min} + Offset \mid n = 1, \cdots, \left\lceil \frac{N}{2} \right\rceil - 1 \right\}.$$

12. The communication method according to any one of claims 7 to 11, wherein receiving the first parameter sent by the wireless transmitter comprises:

receiving the first parameter sent by the wireless transmitter via downlink control information (DCI), wherein the first parameter comprises a parameter group number; or
receiving the first parameter sent by the wireless transmitter via a radio resource control (RRC) signaling.

13. A wireless transmitter, comprising a transceiver module configured to:

send a first parameter to a wireless receiver, wherein the first parameter is configured to determine a first radio resource unavailable for wireless communication, and orthogonal frequency division multiplexing (OFDM) subcarriers occupied by the first radio resource in a frequency domain are non-uniformly distributed; and
send a wireless communication signal on a second radio resource other than the first radio resource.

14. A wireless receiver, comprising:

a transceiver module configured to receive a first parameter sent by a wireless transmitter; and
a processing module configured to determine a first radio resource according to the first parameter, wherein orthogonal frequency division multiplexing (OFDM) subcarriers occupied by the first radio resource in a frequency domain are non-uniformly distributed,
wherein the transceiver module is further configured to receive a wireless communication signal from a second radio resource other than the first radio resource.

15. A communication apparatus, comprising:

one or more processors;
wherein the communication apparatus is configured to perform the communication method according to any one of claims 1 to 6.

16. A communication apparatus, comprising:

one or more processors;
wherein the communication apparatus is configured to perform the communication method according to any one of claims 7 to 12.

17. A communication system, comprising at least one of a wireless transmitter or a wireless receiver, wherein the wireless transmitter is configured to implement the communication method according to any one of claims 1 to 6, and the wireless receiver is configured to implement the communication method according to any one of claims 7 to 12.

18. A storage medium storing instructions, wherein when the instructions are executed on a communication device, the communication device is caused to perform the communication method according to any one of claims 1 to 6 or any one of claims 7 to 12.

sensing reference signal pattern

FIG. 1a

rate matching pattern

FIG. 1b

first wireless resource

FIG. 1c

communication system 200

201

wireless transmitter 201

202

wireless receiver 202

FIG. 2

wireless transmitter

wireless receiver

S3101:a first parameter

S3102,determining the first radio resource according to the first parameter

S3103,determining the first radio resource according to the first parameter.

S3104, the wireless transmitter sends a wireless communication signal on a second radio resource other than the first radio resource

S3105, the wireless receiver receives the wireless communication signal from the second radio resource other than the first radio resource

FIG. 3

| | |
|---|---|
| A first parameter is sent to a wireless receiver | S4101 |

↓

| | |
|---|---|
| A first radio resource is determined according to the first parameter | S4102 |

↓

| | |
|---|---|
| A wireless communication signal is sent on a second radio resource other than the first radio resource | S4103 |

FIG. 4

| | |
|---|---|
| A first parameter sent by a wireless transmitter is received | S5101 |

↓

| | |
|---|---|
| A first radio resource is determined according to the first parameter | S5102 |

↓

| | |
|---|---|
| A wireless communication signal is received from a second radio resource other than the first radio resource | S5103 |

FIG. 5

6100

wireless transmitter

transceiving module — 6101

processing module — 6102

FIG. 6a

6200

wireless receiver

transceiving module — 6201

processing module — 6202

FIG. 6b

**7100**

7101 — processor    transceiver — 7103

7102 — memory

FIG. 7

## INTERNATIONAL SEARCH REPORT

| | International application No. |
|---|---|
| | **PCT/CN2023/110038** |

### A. CLASSIFICATION OF SUBJECT MATTER

H04B 17/382(2015.01)i

According to International Patent Classification (IPC) or to both national classification and IPC

### B. FIELDS SEARCHED

Minimum documentation searched (classification system followed by classification symbols)

IPC:H04B H04W

Documentation searched other than minimum documentation to the extent that such documents are included in the fields searched

Electronic data base consulted during the international search (name of data base and, where practicable, search terms used)

CNTXT, WPABS, ENTXTC, DWPI, VEN, 3GPP, CNKI: OFDM, 感知, 参考信号, 资源, 子载波, 非均匀分布, 频域, 干扰, 不可用, DCI, RRC, reference, signal, resource, nonuniform, frequency, domain, sensing, perception, subcarrier

### C. DOCUMENTS CONSIDERED TO BE RELEVANT

| Category* | Citation of document, with indication, where appropriate, of the relevant passages | Relevant to claim No. |
|---|---|---|
| A | CN 111836368 A (HUAWEI TECHNOLOGIES CO., LTD.) 27 October 2020 (2020-10-27) description, paragraphs [0255] and [0264]-[0328] | 1-18 |
| A | CN 116325603 A (HUAWEI TECHNOLOGIES CO., LTD.) 23 June 2023 (2023-06-23) entire document | 1-18 |
| A | CN 111526591 A (BEIJING SAMSUNG TELECOM R&D CENTER et al.) 11 August 2020 (2020-08-11) entire document | 1-18 |
| A | WO 2022194263 A1 (HUAWEI TECHNOLOGIES CO., LTD.) 22 September 2022 (2022-09-22) entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 March 2024** | **22 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/110038**

| Patent document cited in search report | | | Publication date (day/month/year) | Patent family member(s) | | | Publication date (day/month/year) |
|---|---|---|---|---|---|---|---|
| CN | 111836368 | A | 27 October 2020 | WO | 2020211767 | A1 | 22 October 2020 |
| CN | 116325603 | A | 23 June 2023 | WO | 2022110236 | A1 | 02 June 2022 |
| | | | | EP | 4240078 | A1 | 06 September 2023 |
| | | | | US | 2023300016 | A1 | 21 September 2023 |
| CN | 111526591 | A | 11 August 2020 | KR | 20210111359 | A | 10 September 2021 |
| | | | | WO | 2020159303 | A1 | 06 August 2020 |
| | | | | US | 2022124711 | A1 | 21 April 2022 |
| WO | 2022194263 | A1 | 22 September 2022 | CN | 115118402 | A | 27 September 2022 |

Form PCT/ISA/210 (patent family annex) (July 2022)